(19) Europäisches Patentamt
European Patent Office
Office européen des brevets

(11) **EP 2 408 151 A1**

(12) **EUROPEAN PATENT APPLICATION**
published in accordance with Art. 153(4) EPC

(43) Date of publication:
**18.01.2012 Bulletin 2012/03**

(51) Int Cl.:
**H04L 12/56** (2006.01)

(21) Application number: **09841334.7**

(22) Date of filing: **26.05.2009**

(86) International application number:
**PCT/CN2009/072004**

(87) International publication number:
**WO 2010/102465 (16.09.2010 Gazette 2010/37)**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **13.03.2009 CN 200910105800**

(71) Applicant: **Huawei Technologies Co., Ltd.
Longgang District, Shenzhen
Guangdong 518129 (CN)**

(72) Inventor: **XU, Xiaohu
Guangdong 518129 (CN)**

(74) Representative: **Charles, Glyndwr
Reinhard, Skuhra, Weise & Partner GbR
Patent- und Rechtsanwälte
Friedrichstrasse 31
80801 München (DE)**

(54) **METHOD, APPARATUS AND SYSTEM FOR IMPLEMENTING THE NAT DEVICES REDUNDANCY BACKUP**

(57) A method for implementing redundancy backup between Network Address Translation (NAT) devices includes: an Internet Protocol version 4 (IPv4) address pool and a prefix64 are pre-configured on at least two NAT devices, where the prefix is used to map an IPv4 address to an Internet Protocol version 6 (IPv6) address; the master NAT device advertises in an IPv6 network a route corresponding to the prefix, and advertises in an IPv4 network a route corresponding to the IPv4 address pool; and the slave NAT device processes a packet between a source host and a destination host when the master NAT device fails, where the source host and the destination host are located in different Internet Protocol (IP) networks. With the technical solutions of the present invention, redundancy backup is implemented between multiple NAT devices to improve reliability of networking of NAT devices.

An IPv4 address pool and a prefix64 for mapping an IPv4 address to an IPv6 address are configured on at least two NAT devices — 600

Among the at least two NAT devices, one is determined as a master NAT device and the other is determined as a slave NAT device — 602

The master NAT device advertises in an IPv6 network a route corresponding to the prefix64, and advertises in an IPv4 network a route corresponding to the IPv4 address pool — 604

The slave NAT device processes packets between a source host and a destination host when the master NAT device fails, where the source host and the destination host are located in different IP networks — 606

FIG. 6

## Description

This application claims priority to Chinese Patent Application No. 200910105800.9, filed with the Chinese Patent Office on March 13, 2009 and entitled "METHOD, APPARATUS, AND SYSTEM FOR IMPLEMENTING REDUNDANCY BACKUP BETWEEN NAT DEVICES", which is incorporated herein by reference in its entirety.

## FIELD OF THE INVENTION

The present invention relates to the communications field, and in particular, to a method, an apparatus, and a system for implementing redundancy backup between NAT devices.

## BACKGROUND OF THE INVENTION

In the prior art, in order to enable an IPv6 (Internet Protocol version 6) host to access an IPv4 (Internet Protocol version 4) host through a NAT-PT (Network Address Translation-Protocol Translator, hereinafter referred to as a NAT device), a public IPv4 address pool needs to be configured on the NAT device to translate an internal IPv6 address into a public IPv4 address; and a 96bits prefix (hereinafter referred to as a prefix /96) is configured to be used to map an IPv4 address in an IPv4 network to an IPv6 address, the address is known as an IPv4-mapped IPv6 address. Meanwhile, a route for 96bits prefix (prefix /96) is advertised in an IPv6 network side to attract IPv6 packets, the prefix of destination addresses of these IPv6 packets is a 96bits prefix.

The inventor of the present invention finds that: in the prior art, no redundancy backup is implemented for a NAT device no matter whether the NAT-PT device enables the IPv6 host to access the IPv4 host or enables the IPv4 host to access the IPv6 host, and single-point failures tend to occur in practice. It is assumed that a session is originally forwarded through NAT device 1. If NAT device 1 fails, the session needs to be forwarded from NAT device 2. However, because the address mapping table of NAT device 2 is different from the address mapping table of NAT device 1, the old session is interrupted, and the connection needs to be initiated again. That is, in the prior art, it is impossible to implement backup between multiple NAT devices even if multiple NAT devices are applied.

## SUMMARY OF THE INVENTION

The present invention provides a method for implementing redundancy backup between multiple NAT devices to improve reliability of networking of NAT devices.

A method for implementing redundancy backup between NAT devices according to an embodiment of the present invention includes:

pre-configuring, on at least two NAT devices, an IPv4 address pool and a prefix64, where the prefix64 is used to map an IPv4 address to an IPv6 address; determining a master NAT device and a slave NAT device among the at least two NAT devices; advertising in an IPv6 network, by the master NAT device, a route corresponding to the prefix64, and advertising in an IPv4 network a route corresponding to the IPv4 address pool; and

processing, by the slave NAT device, a packet between a source host and a destination host when the master NAT device fails, where the source host and the destination host are located in different Internet Protocol (IP) networks.

A device for implementing redundancy backup between NAT devices according to another embodiment of the present invention includes a storage module, a route information advertising module and a packet processing module, where:

the storage module, configured to store a configured IPv4 address pool and a prefix64, where the prefix64 is used to map an IPv4 address to an IPv6 address; the route information advertising module, configured to advertise in an IPv6 network a route corresponding to the prefix64, and advertise in an IPv4 network a route corresponding to the IPv4 address pool; and the packet processing module, configured to process a packet between a source host and a destination host, where the source host and the destination host are located in different IP networks.

A system for implementing redundancy backup between NAT devices according to another embodiment of the present invention includes a first device and a second device. An IPv4 address pool and a prefix64 are configured on the first device and the second device, where the prefix64 is used to map an IPv4 address to an IPv6 address.

The master NAT device is configured to advertise in an IPv6 network a route corresponding to the prefix64, and advertise in an IPv4 network a route corresponding to the IPv4 address pool. The slave NAT device is configured to process a packet between a source host and a destination host when the master NAT device fails, where the source host and the destination host are located in different IP networks.

With the technical solutions provided in the embodiments of the present invention, redundancy backup is implemented between multiple NAT devices when an IPv4 host accesses an IPv6 host or when an IPv4 host accesses an IPv6 host. The solutions enable mutual access between the IPv6 network and the IPv4 network in the case of single-point failures in NAT devices, and improve reliability of networking of NAT devices.

**BRIEF DESCRIPTION OF THE DRAWINGS**

FIG. 1 is a simple schematic diagram of a system for implementing redundancy backup between NAT devices according to an embodiment of the present invention;

FIG 2 is a simple schematic diagram of a system for implementing redundancy backup and load balancing between multiple NAT devices according to an embodiment of the present invention;

FIG 3 is a flowchart of a method for implementing redundancy backup between NAT devices according to an embodiment of the present invention;

FIG 4 is a simple schematic diagram of a device for implementing redundancy backup between NAT devices according to an embodiment of the present invention;

FIG 5 is a simple schematic diagram of a device for implementing redundancy backup between NAT devices according to another embodiment of the present invention; and

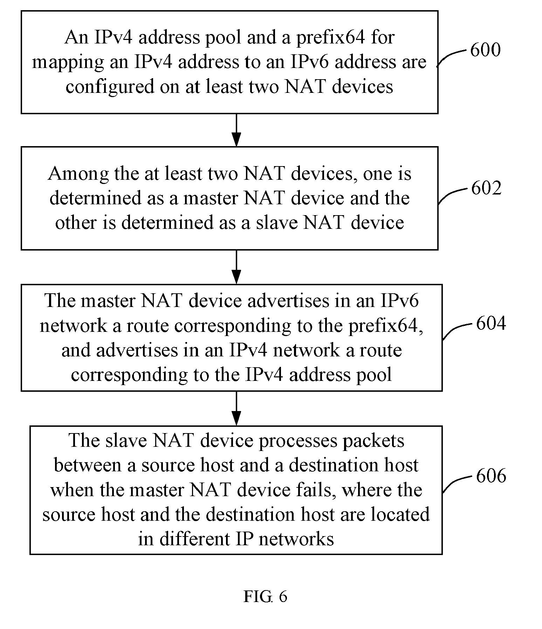

FIG 6 is a flowchart of a method for implementing redundancy backup between NAT devices according to another embodiment of the present invention.

**DETAILED DESCRIPTION OF THE EMBODIMENTS**

The embodiments of the present invention are detailed below with reference to the accompanying drawings. The exemplary embodiments of the present invention are illustrative to help understand the technical solutions, and shall not be construed as limitations on the present invention.

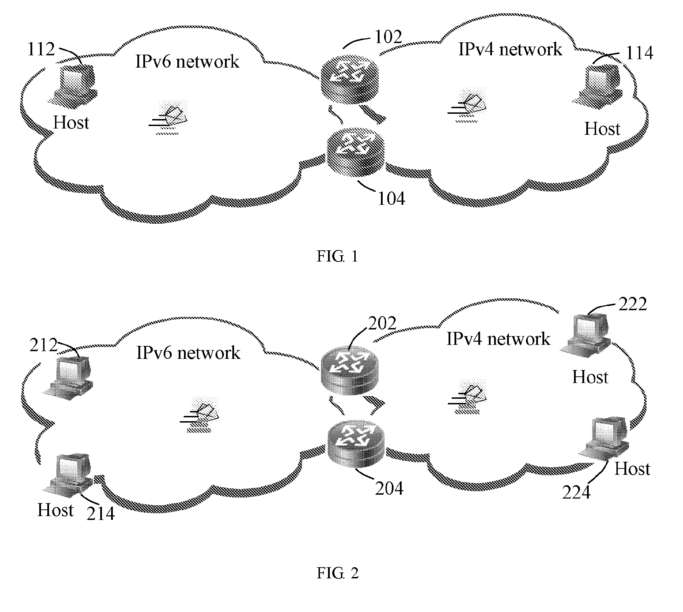

FIG. 1 is a simple schematic diagram of a system for implementing redundancy backup between NAT devices according to an embodiment of the present invention. As shown in FIG. 1, the same IPv4 address pool and the same 96bits prefix are configured on NAT device 102 and NAT device 104, where the 96bits prefix is used to map an IPv4 address to an IPv6 address. A keeplive protocol runs between the NAT device 102 and the NAT device 104. One of the NAT device 102 and the NAT device 104 is determined as a master NAT device, and the other is determined as a slave NAT device. For example, a VRRP (Virtual Router Redundancy Protocol) is used to determine the master NAT device and the slave NAT device. Currently, in the VRRP generally VRRP packets are exchanged in multicast mode. The multicast mode may be changed. For example, when no directly connected network segment exists between the NAT device 102 and the NAT device 104, the VRRP packets may be exchanged in unicast mode. It is assumed that the NAT device 102 is determined as a master NAT device, and that the NAT device 104 is determined as a slave NAT device. In this case, the NAT device 102 advertises a 96bits prefix in an IPv6 network, and advertises an IPv4 address pool in an IPv4 network. If the NAT device 104 does not advertise the foregoing route information in the IPv6 network and the IPv4 network, or, if the NAT device 104 advertises the foregoing route information but sets the cost value to a considerably large value, the NAT device 102 is generally selected for forwarding the packets being routed.

The NAT address translation tables are synchronized between the NAT device 102 and the NAT device 104. For example, a protocol such as the HTTP (Hypertext Transfer Protocol) or a private protocol may be used to implement the synchronization. For example, the synchronization may be implemented in real time or periodically. A host 112 is located in the IPv6 network, and a host 114 is located in the IPv4 network. The host 112 initiates a session to the host 114, and sends an IPv6 packet. The destination address of this packet is an IPv4-mapped IPv6 address, namely, the IPv4 address of the host 114 plus a 96bits prefix, in which the IPv4 address of the host 114 is referred to as IPv4 (host 114), and the source address of the packet is the IPv6 address of the host 112, in which the IPv6 address of the host 112 is referred to as IPv6 (host 112). The IPv6 packet is forwarded to the NAT device 102 along the IPv6 route with the 96bits prefix, and is translated into an IPv4 packet through protocol conversion performed by the NAT device 102. The destination address of the IPv4 packet is IPv4 (host 114), and the source address is an IPv4 address allocated by the NAT device 102 from the IPv4 address pool, and is called IPv4 (host 112). The IPv4 packet is forwarded by the NAT device 102 to the IPv4 network, and an address translation table entry is generated in the address translation table, for example:

$$\text{Inside IPv6} \rightarrow \quad \text{Outside IPv4}$$

$$\text{IPv6 (host 112)} \quad \rightarrow \quad \text{IPv4 (host 112)}$$

The address translation table entry is synchronized to the address translation table of the NAT device 104.

Finally, the IPv4 packet arrives at the host 114. The host 114 sends an IPv4 packet to the host 112 as a response. The destination address of the IPv4 packet is IPv4 (host 112), and the source address is IPv4 (host 114). The IPv4 packet arrives at the NAT device 102 along the route with the IPv4 prefix in the IPv4 address pool sent by the NAT device 102. The NAT device 102 translates the IPv4 packet into an IPv6 packet through protocol conversion. The destination address of the IPv6 packet is IPv6 (host 112). The destination address is obtained according to the address translation table entry, and the source address is 96bits prefix + IPv4 (host 114). Finally, the packet arrives at the host 112.

When a failover between the master NAT device and the slave NAT device occurs, namely, when the NAT device 104 changes to a master NAT device, if the NAT device 104 advertises no route information when serving as a slave NAT device, the NAT device 104 advertises route information at this time; if the NAT device 104 advertises route information when serving as a slave NAT device but sets the cost to a considerably large value, the NAT device 104 changes the cost value at this time. When the NAT device 102 changes to a slave NAT device, the NAT device 102 cancels the previously advertised route information. If the NAT device 102 fails or the network is disconnected, the advertised route information is invalid to other routing devices. In this way, to other routing devices, the route information advertised by the NAT device 104 is currently the best, and the packet sent between the host 102 and the host 104 is translated and forwarded through the NAT device 104. Because the address translation tables are synchronized between the NAT device 104 and the NAT device 102, the session created between the host 102 and the host 104 before the failover occurs between the master NAT device and the slave NAT device can be translated and forwarded through the NAT device 104 without interruption. For the conditions that trigger the failover between the master NAT device and the slave NAT device, see the VRRP protocol.

In the embodiment shown in FIG. 1, it is assumed that the host 112 sends an IPv6 packet to the host 114 first.

In another embodiment of the present invention, the host 114 may send an IPv4 packet to the host 112 first. In this case, through a DNS (Domain Name Service server), the host 114 knows the IPv4 address of the host 112, and generates an address translation table entry in the address translation table of the NAT device 102, for example:

Inside IPv6 -> Outside IPv4

IPv6 (host 112)    ->    IPv4 (host 112)

The address translation table entry is synchronized to the address translation table of the NAT device 104.

It should be noted that: (1) In the foregoing embodiment, the 96bits prefix for mapping an IPv4 address to an IPv6 address may be replaced with a 64 bits prefix or other prefix having other length. That is, the forgoing embodiment is described by taking an example for a 96bits prefix (shown as prefix/96), however, the forgoing embodiment is not limited with a 96bits prefix, the following embodiment is described by taking an example for a 64 bits prefix and the following embodiment may be implemented in the case of a prefix 96. (2) The NAT device 102 and the NAT device 104 may be determined as the master NAT device and the slave NAT device through a keeplive protocol (namely, an automatic election protocol), or determined through manual configuration. (3) The foregoing address translation table is also known as an address mapping table, which is expressed as an address mapping table uniformly below.

Another embodiment of the present invention deals with cold backup and hot backup between the NAT device 102 and the NAT device 104 when a failover occurs between the master NAT device and the slave NAT device, namely, when the NAT device 104 changes to a master NAT device.

The core conception of cold backup is: As far as the source host is concerned, the destination host's IP address in the network where the source host is located remains unchanged. The core conceptions of hot backup are: (1) As far as the source host is concerned, the destination host's IP address in the network where the source host is located remains unchanged; and (2) as far as the destination host is concerned, the source host's IP address in the network where the destination host is located remains unchanged. The source host and the destination host are located in different IP networks. For example, the source host in FIG 1 is host 112 and located in an IPv6 network, and the destination host is host 114 and located in an IPv4 network.

According to the core conceptions, cold backup and hot backup in the following two scenarios are described below:

(1) Host 112 in the IPv6 network accesses host 114 in the IPv4 network; and
(2) Host 114 in the IPv4 network accesses host 112 in the IPv6 network.

In scenario 1, when the host 112 in the IPv6 network accesses the host 114 in the IPv4 network, the cold backup method is as follows:

Different IPv4 address pools are configured on the NAT 102 and the NAT 104, but the NAT device 102 and the NAT device 104 use the same prefix. Because the same prefix is used, as far as the source host (host 112) is concerned, the destination host's IP address in the network where the source host is located remains unchanged, that is, its destination address does not change when a failover occurs between the NAT 102 and the NAT 104, and is always the prefix64 plus the destination host's IPv4 address. Therefore, it is not necessary to synchronize the address mapping between the NAT 102 and the NAT 104. Because the IPv4 address pool configurations on the NAT 102 and the NAT 104 are different, the IPv4 address of the host 112 is different after the source address of the host 112 is translated by the NAT device 102.

The host 112 in the IPv6 network sends the IPv6 packet to the NAT 102, and the NAT 102 translates the IPv6 address (source address) of the IPv6 packet into the IPv4 address (an IPv4 address allocated to the host 114 from the IPv4 address pool), removes the prefix64 according to the synthesized IPv6 address of the destination host, generates anIPv4 address, and sends the packet to the destination host 114 in the IPv4 network.

The route advertisement process is:

Through a manual configuration mode or an automatic election protocol, a master NAT device (assuming the NAT device 102) and a slave NAT device (assuming the NAT device 104) are selected from two NAT devices of a backup group. The master NAT device and the slave NAT device advertise in the IPv6 network routes corresponding to the prefix64, and advertise in the IPv4 network routes corresponding to their respective IPv4 address pools. Because the routes advertised in the IPv6 network by the master NAT device and the slave NAT device are intended for the same prefix64, the master NAT device and the slave NAT device may advertise the routes corresponding to the prefix64 in the following two different modes to ensure that the packet from the IPv6 network to the IPv4 network is translated and forwarded through the master NAT device 102 in normal circumstances:

(1) The master NAT device 102 sets a cost to a considerably small value, and the slave NAT device 104 sets the cost to a considerably large value.
(2) The route advertised by the master NAT device 102 has a fine granularity, and the route advertised by the slave NAT device 104 has a coarse granularity. For example, the master NAT device 102 advertises two routes: 10.1.1.0/25 and 10.1.1.128/25, and the slave NAT104 advertises one route: 10.1.1.0/24.

If the automatic election protocol is applied, the foregoing route may be advertised by the master NAT device, and the slave NAT device advertises the route corresponding to its own IPv4 address pool in the IPv4 network only, but does not advertise the route corresponding to the prefix64 unless the master NAT device fails and the slave NAT device changes to a new master NAT device. In this way, the packet is always forwarded and translated through the master NAT device even if the methods described in (1) and (2) are not applied.

When the host 112 in the IPv6 network accesses the host 114 in the IPv4 network, the hot backup method is as follows:

The NAT device 102 and the NAT device 104 are configured a same IPv4 address pool and use a same prefix64. As far as the source host, host 112, is concerned, the destination host's IP address in the network where the source host is located remains unchanged, namely, the destination address does not change before or after a failover occurs between the NAT device 102 and the NAT device 104. It is necessary to synchronize the address mapping between the NAT device 102 and the NAT device 104 to ensure that the IPv4 address allocated by the NAT device 102 is the same as the IPv4 address allocated by the NAT device 104 for a same IPv6 host (although the NAT device 102 and the NAT device 104 have a same IPv4 address pool, the IPv4 addresses respectively allocated to the source host 112 in the network of the destination host 114 from the IPv4 address pools of the NAT device 102 and the NAT device 104 may differ).

The host 112 in the IPv6 network sends an IPv6 packet to the NAT device 102, and the NAT device 102 translates the IPv6 address (source address) of the IPv6 packet into a source IPv4 address (an IPv4 address allocated to the host 114 from the IPv4 address pool), removes the prefix64 according to the synthesized IPv6 address of the destination host, generates a destination IPv4 address, and sends the translated packet to the destination host 114 in the IPv4 network.

The route advertisement process is as follows:

Through a manual configuration mode or an automatic election protocol, a master NAT device (assuming the NAT device 102) and a slave NAT device (assuming the NAT device 104) are selected from two NAT devices of a backup group. The master NAT device and the slave NAT device advertise in the IPv6 network routes corresponding to the prefix64, and advertise in the IPv4 network routes corresponding to the IPv4 address pool. Because the routes advertised by the master NAT device and the slave NAT device in the IPv6 network and the IPv4 network are intended for a same prefix64 and a same IPv4 address pool respectively, the route may be advertised in the following two modes to ensure that the packet between the IPv6 network and the IPv4 network is translated and forwarded through the master NAT device 102 in normal circumstances:

(1) The master NAT device 102 sets a cost to a considerably small value, and the slave NAT device 104 sets a cost to a considerably large value.
(2) The route advertised by the master NAT device 102 has a fine granularity, and the route advertised by the slave NAT device 104 has a coarse granularity. For example, the master NAT device 102 advertises two routes: 10.1.1.0/25 and 10.1.1.128/25, and the slave NAT104 advertises one route: 10.1.1.0/24.

If an automatic election protocol is applied, the foregoing route may be advertised by the master NAT device, and the slave NAT device does not advertise the foregoing route unless the master NAT device fails and the slave NAT device changes to a new master NAT device. In this way, the packet is always forwarded and translated through the master NAT device even if the methods described in (1) and (2) are not applied.

In scenario 2, when the host 114 in the IPv4 network accesses the host 112 in the IPv6 network, the cold backup method is as follows:

The NAT device 102 and the NAT device 104 are configured a same IPv4 address pool but use different prefixes. As far as the source host, host 114, is concerned, its destination address is an IPv4 address allocated by the NAT device 102 from the IPv4 address pool. It is necessary to synchronize address mapping information between the NAT device 102 and the NAT device 104 so that the destination host's IP address in the network where the source host is located remains unchanged, and that the NAT device 102 and the NAT device 104 translate the IPv6 host address of an IPv6 host into a same IPv4 address. Because different prefixes are used, as far as the destination host 112 is concerned, the source host 114 in the network where the destination host is located has different IPv6 addresses, namely, the IPv6 addresses as a result of adding the prefixes to the IPv4 address of the source host differ.

The host 114 in the IPv4 network sends the IPv4 packet to the NAT device 102, and the NAT device 102 translates the IPv4 address of the IPv4 packet into an IPv6 address, and sends the IPv4 packet to the destination host 112 in the IPv6 network. When a failover from the NAT device 102 to the NAT device 104 occurs, namely, when the NAT device 104 changes to a master NAT device, the packet from the host 114 to the host 112 is forwarded and translated through the NAT device 104. Because the address mapping information is synchronized, the IPv4 addresses corresponding to the host 112 are the same on the two NAT devices. Therefore, the whole failover process is transparent to the host 112. However, because the prefix64 is different, namely, the synthesized IPv6 address of the host 114 changes, the old session is interrupted, and the host 114 initiates a connection request again. Therefore, the packet of the host 114 in the IPv4 network is forwarded and translated through the NAT device 104, and sent to the host 112.

The route advertisement process is as follows:

Through a manual configuration mode or an automatic election protocol, a master NAT device (assuming the NAT device 102) and a slave NAT device (assuming the NAT device 104) are selected from two NAT devices of a backup group. The master NAT device and the slave NAT device advertise in the IPv4 network routes corresponding to the IPv4 address pool, and advertise in the IPv6 network routes corresponding to their respective prefix64. Because the routes advertised by the master NAT device and the slave NAT device in the IPv4 network are intended for the same IPv4 address pool, the route corresponding to the IPv4 address pool may be advertised in the following two modes to ensure that the packet between the IPv4 network and the IPv6 network is translated and forwarded through the master NAT device 102 in normal circumstances:

(1) The master NAT device 102 sets a cost to a considerably small value, and the slave NAT device 104 sets a cost to a considerably large value.
(2) The route advertised by the master NAT device 102 has a fine granularity, and the route advertised by the slave NAT device 104 has a coarse granularity. For example, the master NAT device 102 advertises two routes: 10.1.1.0/25 and 10.1.1.128/25, and the slave NAT104 advertises one route: 10.1.1.0/24.

If an automatic election protocol is applied, the foregoing route may be advertised by the master NAT device, and the slave NAT device advertises the route corresponding to its own prefix64 only, but does not advertise the route corresponding to the IPv4 address pool unless the master NAT device fails and the slave NAT device changes to a new master NAT device. In this way, the packet is always forwarded and translated through the master NAT device even if the methods described in (1) and (2) are not applied.

With the technical solutions provided in the embodiments of the invention, cold backup and load sharing are implemented between multiple NAT devices when an IPv4 host accesses an IPv6 host or when an IPv4 host accesses an IPv6 host. The solutions enable mutual access between the IPv6 network and the IPv4 network in the case of single-point failures in NAT devices, and improve reliability of networking of NAT devices.

When the host 114 in the IPv4 network accesses the host 112 in the IPv6 network, the hot backup method is as follows:

The NAT device 102 and the NAT device 104 are configured a same IPv4 address pool and a same prefix. As far as the source host, host 114, is concerned, its destination address is an IPv4 address allocated by the NAT device 102 from the IPv4 address pool. It is necessary to synchronize address mapping information between the NAT device 102 and the NAT device 104 so that the destination host's IP address in the network where the source host is located remains unchanged, and that the NAT device 102 and the NAT device 104 translate an IPv6 host address of an IPv6 host into a same IPv4 address. Because a same prefix64 is used, as far as the destination host 112 is concerned, the source host 114's IPv6 addresses in the network where the destination host is located are the same, namely, the IPv6 addresses as a result of adding the prefix64 to the IPv4 address of the source host are the same.

The source host 114 in the IPv4 network sends the IPv4 packet to the NAT device 102 according to the destination host's IPv4 address in the network where the source host is located, and the NAT device 102 translates the IPv4 address of the IPv4 packet into an IPv6 address, and sends the packet to the destination host 112 in the IPv6 network. When a failover from the NAT device 102 to the NAT device 104 occurs, namely, when the NAT device 104 changes to a master NAT device, the packet from the host 114 to the host 112 is forwarded and translated through the NAT device 104. Because the address mapping information is synchronized, the IPv4 address corresponding to the host 112 is the same on the two NAT devices, and the synthesized IPv6 address of the host 114 is the same. Therefore, the session is not interrupted during and after the failover between the two NAT devices, and the packet of the host 114 in the IPv4 network is forwarded and translated through the NAT device 104, and sent to the host 112.

The route advertisement process is as follows:

Through a manual configuration mode or an automatic election protocol, a master NAT device (assuming the NAT device 102) and a slave NAT device (assuming the NAT device 104) are selected from two NAT devices of a backup group. The master NAT device and the slave NAT device advertise in the IPv6 network routes corresponding to the prefix64, and advertise in the IPv4 network routes corresponding to the IPv4 address pool. Because the routes advertised by the master NAT device and the slave NAT device in the IPv6 network and the IPv4 network are intended for the same prefix64 and the same IPv4 address pool respectively, the routes may be advertised in the following two modes to ensure that the packet between the IPv6 network and the IPv4 network is translated and forwarded through the master NAT device 102 in normal circumstances:

(1) The master NAT device 102 sets a cost to a considerably small value, and the slave NAT device 104 sets a cost to a considerably large value.
(2) The route advertised by the master NAT device 102 has a fine granularity, and the route advertised by the slave NAT device 104 has a coarse granularity. For example, the master NAT device 102 advertises two routes: 10.1.1.0/25 and 10.1.1.128/25, and the slave NAT104 advertises one route: 10.1.1.0/24.

If an automatic election protocol is applied, the foregoing route may be advertised by the master NAT device rather than the slave NAT device. The slave NAT device does not advertise the foregoing route, unless the master NAT device fails and the slave NAT changes to a new master NAT device. In this way, the packet is always forwarded and translated through the master NAT device even if the methods described in (1) and (2) are not applied. With the technical solutions provided in the embodiments of the present invention, hot backup is implemented between multiple NAT devices when an IPv4 host accesses an IPv6 host or when an IPv4 host accesses an IPv6 host. The solutions ensure non-interruption of the session during and after the failover between the NAT devices, enable mutual access between the IPv6 network and the IPv4 network in the case of single-point failures in NAT devices, and improve reliability of networking of NAT devices.

FIG 2 is a simple schematic diagram of a system for implementing redundancy backup and load balancing between multiple NAT devices according to an embodiment of the present invention. As shown in FIG 2, two instances (instance 1 and instance 2) are configured on the NAT device 202 and the NAT device 204. Different priorities are configured for instance 1 and instance 2, and a keeplive protocol runs in instance 1 and instance 2 respectively to determine the corresponding master NAT device in instance 1 and instance 2. For example, for better sharing of loads, the master NAT device is preferably different in different instances. For example, the NAT device 202 is a master NAT device in instance 1 and a slave NAT device in instance 2, but the NAT device 204 is a slave NAT device in instance 1 and a master NAT device in instance 2. IPv4 address pool 1 and 96bits prefix 1 are configured for instance 1, where prefix 1 is used to map an IPv4 address to an IPv6 address; and IPv4 address pool 2 and 96bits prefix 2 are configured for instance 2, where prefix 2 is used to map an IPv4 address to an IPv6 address. IPv4 address pool 2 is different from IPv4 address pool 1, and 96bits prefix 2 is different from 96bits prefix 1. In instance 1 and instance 2, redundancy backup is implemented between the NAT device 202 and the NAT device 204; 96bits prefix 1, 96bits prefix 2, IPv4 address pool 1 and IPv4 address pool 2 are configured on the NAT device 202 and NAT device 204. The NAT device 202 advertises in the IPv6 network 96bits prefix 1, and advertises in the IPv4 network IPv4 address pool 1. The NAT device 204 advertises in the IPv6 network 96bits prefix 2, and advertises in the IPv4 network IPv4 address pool 2. For details, see the embodiment shown in FIG 1. In different instances, different NAT devices are selected as master NAT devices. The packets from different hosts can be translated and forwarded through different NAT devices so that load balancing is implemented between multiple NAT devices.

For example, when the host 212 communicates with the host 222, the host 212 sends an IPv6 packet to the host 222, and the IPv4 address of the host 222 is translated into an IPv6 address by using 96bits prefix 1. The destination address of the IPv6 packet is "96bits prefix 1 + IPv4 (host 222)", and the source address is IPv6 (host 212). As a master NAT device in instance 1, the NAT device 202 advertises 96bits prefix 1 to the IPv6 network, and advertises IPv4 address pool 1 to the IPv4 network. In this way, the IPv6 packet sent by the host 212 to the host 222 is forwarded to the NAT device 202 along the IPv6 route corresponding to 96bits prefix 1. The IPv6 packet is translated by the NAT device 202 into an IPv4 packet through protocol conversion. The destination address of the IPv4 packet is IPv4 (host 222), and the source address is an IPv4 address allocated by the NAT device 202 from IPv4 address pool 1 and may be expressed as IPv4 (host 212). The IPv4 packet is forwarded by the NAT device 202 to the IPv4 network, and an address translation table entry is generated in the address translation table, as shown below:

Inside IPv6 ->    Outside IPv4

IPv6 (host 212)      ->      IPv4 (host 212)

The address translation table entry is synchronized to the address translation table of the NAT device 204.

Finally, the IPv4 packet arrives at the host 222. The host 222 sends an IPv4 packet to the host 212 as a response. The destination address of the IPv4 packet is IPv4 (host 212), and the source address is IPv4 (host 222). The IPv4 packet arrives at the NAT device 202 along the route corresponding to IPv4 prefix 1 in the IP address pool 1 sent by the NAT device 202. The IPv4 packet is translated by the NAT device 202 into an IPv6 packet through protocol conversion. The destination address of the IPv6 packet is IPv6 (host 212), and the source address is 96bits prefix + IPv4 (host 222). Finally, the IPv6 packet arrives at the host 212. When the host 214 communicates with the host 224, the host 214 sends an IPv6 packet to the host 224, and uses 96bits prefix 2 to translate the IPv4 address of the host 224 into an IPv6 address. The destination address of the IPv6 packet is "96bits prefix 2 + IPv4 (host 224)", and the source address is IPv6 (host 214). As a master NAT device in instance 2, the NAT device 204 advertises 96bits prefix 2 to the IPv6 network, and advertises IP address pool 2 to the IPv4 network. In this way, the IPv6 packet sent by the host 214 to the host 224 is forwarded to the NAT device 204 along the IPv6 route corresponding to 96bits prefix 2. The IPv6 packet is translated by the NAT device 204 into an IPv4 packet through protocol conversion. The destination address of the IPv4 packet is IPv4 (host 224), and the source address is an IPv4 address allocated by the NAT device 204 from IPv4 address pool 2 and may be expressed as IPv4 (host 214). The IPv4 packet is forwarded by the NAT device 204 to the IPv4 network, and an address translation table entry is generated in the address translation table, as shown below:

Inside IPv6 ->    Outside IPv4

IPv6 (host 214)      ->      IPv4 (host 214)

The address translation table entry is synchronized to the address translation table of the NAT device 202.

Finally, the IPv4 packet arrives at the host 224. The host 224 sends an IPv4 packet to the host 214 as a response. The destination address of the IPv4 packet is IPv4 (host 214), and the source address is IPv4 (host 224). The IPv4 packet arrives at the NAT device 204 along the route corresponding to IPv4 prefix 2 in the IP address pool 2 sent by the NAT device 204. The NAT device 204 translates the IPv4 packet into an IPv6 packet through protocol conversion. The destination address of the IPv6 packet is IPv6 (host 214), and the source address is "96bits prefix 2 + IPv4 (host 224)". Finally, the IPv6 packet arrives at the host 214.

With the solution in the embodiment shown in FIG. 2, load balancing is implemented between multiple NAT devices while redundancy backup is supported.

The embodiment shown in FIG. 2 takes two NAT devices as an example. In other embodiments, more NAT devices may be networked to implement redundancy backup and load sharing between multiple NAT devices. The principles are the same as the principles of the embodiment shown in FIG. 2.

Likewise, when the IPv4 host accesses the IPv6 host, redundancy backup and load balancing are implemented between multiple NAT devices in the following way:

Two groups are configured on the master NAT device 202 and the NAT device 4. That is, the groups correspond to different IPv4 address pools. For example, 10.1.1.0/24 corresponds to group 1, and 20.1.1.0/24 corresponds to group 2. Through the VRRP or manual configuration, the NAT device 202 is determined as the master NAT device of group 1 and the slave NAT device of group 2, and the NAT device 204 is determined as the slave NAT device of group 1 and the master NAT device of group 2.

If the DNS response message passes through the NAT device 202, the NAT device 202 serves as the master NAT device of group 1. An IPv4 address is allocated to the AAAA record (namely, the IPv6 address of the destination IPv6 host) in the DNS, from the IPv4 address pool corresponding to group 1, and the mapping relationship is recorded in the NAT mapping table. Likewise, if a DNS response message passes through the NAT device 204, an IPv4 address is allocated from the IPv4 address pool in group 2; or, after receiving the DNS response message, the NAT device allocates an IPv4 address from the corresponding IPv4 address pool according to the AAAA record. The implementation methods are diverse. For example, the allocated IPv4 address depends on the parity of a specific bit of the AAAA record (namely, an IPv6 address). It should be noted that: If the hot backup mode is applied, the IPv6 address needs to be synthesized from different prefixe64 with respect to different groups. For example, group 1 uses prefix64 A, and group 2 uses prefix64 B. In this way, the inbound and outbound packets in the same session pass through the same NAT device. With the solution in the embodiment shown in FIG. 2, load balancing is implemented between multiple NAT devices while redundancy backup is supported.

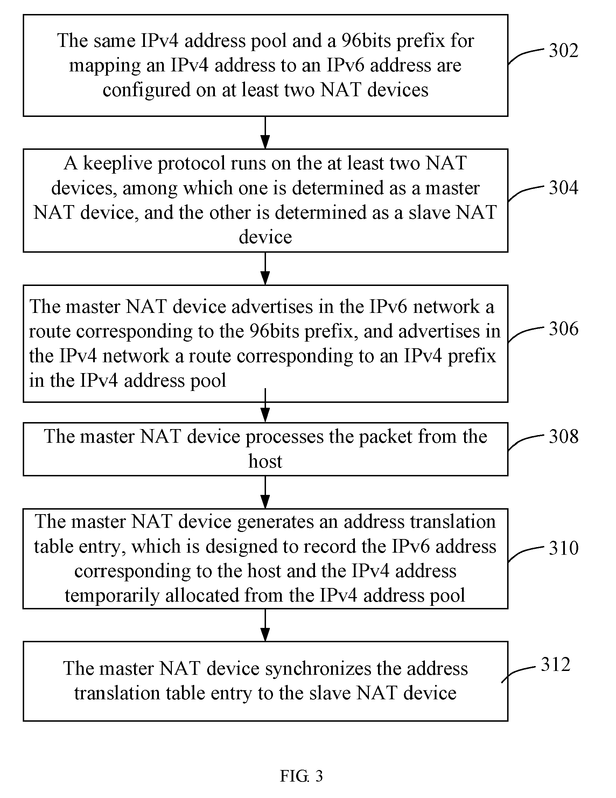

FIG 3 is a flowchart of a method for implementing redundancy backup between NAT devices according to an embodiment of the present invention. As shown in FIG 3, the method includes the following steps:

302. A same IPv4 address pool and a same prefix96 that is used for mapping an IPv4 address to an IPv6 address are configured on at least two NAT devices.
304. A keeplive protocol runs on the at least two NAT devices. One of the at least two NAT devices is determined as a master NAT device, and the other is determined as a slave NAT device.
306. The master NAT device advertises in an IPv6 network the 96bits prefix, and advertises in an IPv4 network the IPv4 address pool.
308. The master NAT device processes the packet from a host.
For example, after receiving a packet from the host, the master NAT device performs translation between the IPv6 address and the IPv4 address, and forwards the translated packet.
310. The master NAT device generates an address translation table entry, where the address translation table entry is used to record the IPv6 address corresponding to the host, and the IPv4 address temporarily allocated from the IPv4 address pool.
312. The master NAT device synchronizes the address translation table entry to the address translation table of the slave NAT device.

For details, see the embodiment shown in FIG. 1.

In another embodiment of the present invention, a keeplive protocol runs on the at least two NAT devices in step 304 in FIG. 3, one of the at least two NAT devices is determined as a master NAT device, and the other is determined as a slave NAT device. The method includes the following step:

At least two instances are configured on at least two NAT devices; different priorities are configured for different instances; a keeplive protocol runs in each instance; one of the at least two NAT devices is determined as a master NAT device, and the other is determined as a slave NAT device. For example, when a master NAT device is determined for each instance, if possible, the master NAT device varies with instances to implement load sharing.

Accordingly, step 308 in FIG 3, the master NAT device processes the packet from the host includes: the master NAT device processes the packet from the host, where the prefix in the destination address of the packet corresponds to the master NAT device. Step 312 in FIG. 3, the master NAT device synchronizes the address translation table entry to the address translation table of the slave NAT device of the corresponding instance, includes: the master NAT device synchronizes the address translation table entry to the address translation table of the slave NAT device of the corresponding instance, and the address translation table is the address mapping table described below. For details, see the embodiment shown in FIG. 2.

It should be noted that: In step 302, the 96bits prefix used for mapping an IPv4 address to an IPv6 address is one of various prefixes. Prefix64 or other prefix with different length may be used in an embodiment to be synthesized with an IPv4 address to an IPv6 address. An IPv4 address pool and a prefix configured on the at least two NAT devices may be the same or different. In step 304, one of the at least two NAT devices is selected as a master NAT device, and the other is selected as a slave NAT device, where the selection on the at least two NAT devices may be performed through a keeplive protocol, or an automatic election protocol, or through manual configuration.

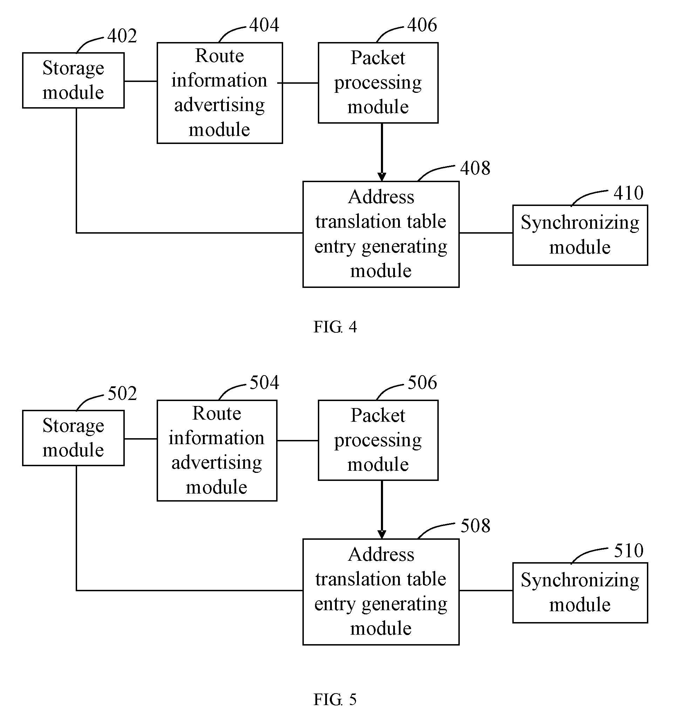

FIG. 4 is a simple schematic diagram of a device for implementing redundancy backup between NAT devices according to an embodiment of the present invention.

As shown in FIG. 4, the device includes: a storage module 402, a route information advertising module 404, a packet processing module 406, an address translation table entry generating module 408, and a synchronizing module 410. The storage module 402 is configured to store the configured IPv4 address pool and the 96bits prefix that is used for mapping an IPv4 address to an IPv6 address. The route information advertising module 404 is configured to advertise in the IPv6 network the 96bits prefix, and advertise in the IPv4 network the IPv4 address pool. The packet processing module 406 is configured to process the packet from a host according to the IPv4 address pool and the 96bits prefix. The address translation table entry generating module 408 is configured to generate an address translation table entry after the packet processing module 406 processes the packet from the host; where the address translation table entry is used to record the IPv6 address corresponding to the host, and the IPv4 address temporarily allocated from the IPv4 address pool. The storage module 402 is further configured to store the address translation table entry generated by the address translation table entry generating module 408. The synchronizing module 410 is configured to synchronize the address translation table entry to the address translation table of the slave NAT device. The modules shown in FIG. 4 are illustrative in nature, and the above modules may be integrated, for example, multiple modules may be integrated into one unit.

FIG 4 is a simple schematic diagram of a device for implementing redundancy backup between NAT devices according to another embodiment of the present invention, as detailed below:

Another device for implementing redundancy backup between NAT devices includes a storage module, a route information advertising module and a packet processing module, where:

the storage module, configured to store a configured IPv4 address pool and a 64bits prefix, where the 64bits prefix is used to map an IPv4 address to an IPv6 address;
the route information advertising module, configured to advertise in an IPv6 network a route corresponding to the 64bits prefix, and advertise in an IPv4 network a route corresponding to the IPv4 address pool; and
the packet processing module, configured to process a packet between a source host and a destination host, where the source host and the destination host are located in different IP networks.

The device further includes an address mapping translation table entry generating module, which is equivalent to the address translation table entry generating module in FIG. 4.

The address mapping table entry generating module is configured to generate an address mapping table entry after the packet processing module processes the packet from the source host, where the address mapping table entry is the mapping relationship between the IPv4 address allocated to the IPv6 host from the IPv4 address pool and the IPv6 address of the IPv6 host.

In this case, the storage module is further configured to pre-store the address mapping table entry generated by the address mapping table entry generating module.

The synchronizing module is configured to synchronize the address mapping table entry to the address mapping table of the slave NAT device.

The storage module is specifically configured to:

store the pre-configured different IPv4 address pools and the same prefix64 on the at least two NAT devices; or
store the pre-configured different prefix64 and the same IPv4 address pool on the at least two NAT devices; or
store the pre-configured same IPv4 address pool and the same prefix64 on the at least two NAT devices.

With the device provided in the embodiment of the present invention, cold backup and hot backup are implemented between multiple NAT devices when an IPv4 host accesses an IPv6 host or when an IPv4 host accesses an IPv6 host. Therefore, mutual access is enabled between the IPv6 network and the IPv4 network in the case of single-point failures in NAT devices, and reliability of networking of NAT devices is improved.

FIG 5 is a simple schematic diagram of a device for implementing redundancy backup between NAT devices according to another embodiment of the present invention. As shown in FIG 5, the device includes: a storage module 502, a route information advertising module 504, a packet processing module 506, an address translation table entry generating module 508, and a synchronizing module 510. The storage module 502 is configured to store the configured IPv4 address pool and a 96bits prefix that is used for mapping an IPv4 address to an IPv6 address. The route information advertising module 504 is configured to advertise in the IPv6 network the prefix96, and advertise in the IPv4 network the IPv4 address pool. The packet processing module 506 is configured to process the packet according to the IPv4 address pool and the 96bits prefix, where the destination address prefix of the packet is the 96bits prefix advertised by the route information advertising module 504. The address translation table entry generating module 508 is configured to generate an address translation table entry after the packet processing module 506 processes the packet from a host, where the address translation table entry is used to record the IPv6 address corresponding to the host and the IPv4 address temporarily allocated from the IPv4 address pool. The storage module 502 is further configured to store the address translation table entry generated by the address translation table entry generating module 506. The synchronizing module 510 is configured to synchronize the address translation table entry to an address translation table of a second device, where the second device is the slave NAT device in the first instance. The storage module 502 is further configured to store information synchronized from a second device, where the second device is the master NAT device in the second instance. For details, see the embodiment shown in FIG. 2.

With the device provided in the embodiment of the present invention, load sharing is implemented between multiple NAT devices when an IPv4 host accesses an IPv6 host or when an IPv4 host accesses an IPv6 host. Therefore, reliability of networking of NAT devices is improved.

On the basis of implementing the foregoing device, a system for implementing redundancy backup between NAT devices is provided in an embodiment of the present invention. The system includes a first device and a second device; a same IPv4 address pool and a prefix64 that is used for mapping an IPv4 address to an IPv6 address are configured on the first device and the second device; one of the first device and the second device is determined as a master NAT device, and the other is determined as a slave NAT device.

The master NAT device is configured to advertise in an IPv6 network a route corresponding to the prefix64, and advertise in an IPv4 network a route corresponding to the IPv4 address pool. The slave NAT device is configured to process a packet between a source host and a destination host when the master NAT device fails, where the source host and the destination host are located in different IP networks.

The master NAT device is further configured to generate an address mapping table entry and synchronize the address mapping table entry to the address mapping table of the slave NAT device, where the address mapping table entry is the mapping relationship between the IPv4 address allocated to the IPv6 host from the IPv4 address pool and the IPv6 address of the IPv6 host.

In this system, a first instance and a second instance are configured on the first device, and the first instance and the second instance are also configured on the second device. The first instance and the second instance determine the corresponding master NAT device and slave NAT device respectively.

The master NAT device corresponding to a different instance in the system advertises a different prefix64.

Specifically, for the system structure of the master NAT device and the slave NAT device, see the detailed description of the embodiment in FIG. 2.

A method for implementing redundancy backup between NAT devices according to another embodiment of the present invention includes the following steps:

S600. An IPv4 address pool and a prefix64 are preconfigured on at least two NAT devices, where the prefix64 is used to map an IPv4 address to an IPv6 address.

The configuration on the at least two NAT devices is:

different IPv4 address pools and a same prefix64 are configured on the at least two NAT devices; or different prefix64 and a same IPv4 address pool are configured on the at least two NAT devices; or a same IPv4 address pool and a same prefix64 are configured on the at least two NAT devices.

S602. One of the at least two NAT devices is determined as a master NAT device, and the other(s) is (are) determined as a slave NAT device.

When the master NAT device fails, at least two instances are configured on the at least two NAT devices. The at least two instances determine a master NAT device and a slave NAT device among the at least two NAT devices respectively through an automatic election protocol or manual configuration. Each instance corresponds to a different master NAT device.

S604. The master NAT device advertises in an IPv6 network a route corresponding to the prefix64, and advertises in an IPv4 network a route corresponding to the IPv4 address pool. After S604, the method includes the following steps: The master NAT device generates an address mapping table entry, and synchronizes the address mapping table entry to the address mapping table of the slave NAT device.

The address mapping table entry is the mapping relationship between the IPv4 address allocated to the IPv6 host from the IPv4 address pool and the IPv6 address of the IPv6 host. S606. The slave NAT device processes a packet between a source host and a destination host when the master NAT device fails, where the source host and the destination host are located in different IP networks.

Specifically, when different IPv4 address pools and a same prefix64 are configured on the at least two NAT devices, or different prefix64 and a same IPv4 address pool are configured on the at least two NAT devices, the destination host's IP address in the network of the source host remains unchanged; or, when a same IPv4 address pool and a same prefix64 are configured on the at least two NAT devices, the destination host's IP address in the network of the source host remains unchanged, and the source host's IP address in the network of the destination host remains unchanged.

With the technical solutions provided in the embodiment of the present invention, cold backup and hot backup are implemented between multiple NAT devices when an IPv4 host accesses an IPv6 host or when an IPv4 host accesses an IPv6 host. Therefore, reliability of networking of NAT devices is improved. In some embodiments of the present invention, both redundancy backup and load sharing can be implemented between multiple NAT devices.

With the technical solutions of the embodiments of the present invention, redundancy backup is implemented between multiple NAT devices to improve reliability of networking of NAT devices. In some embodiments of the present invention, redundancy backup and load sharing can be implemented between multiple NAT devices simultaneously.

Some of the steps in the embodiments of the present invention may be implemented by software, and the corresponding software programs may be stored in readable storage media such as a hard disk or a Compact Disk-Read Only Memory (CD-ROM).

The above descriptions are merely exemplary embodiments of the present invention, but not intended to limit the scope of the present invention. Any modifications, variations or replacements that can be easily derived by those skilled in the art shall fall within the scope of the present invention.

**Claims**

1. A method for implementing redundancy backup between Network Address Translation (NAT) devices, **characterized in** comprising:

   pre-configuring an Internet Protocol version 4 (IPv4) address pool and a prefix64 on at least two NAT devices, wherein the prefix64 is used to map an IPv4 address to an Internet Protocol version 6 (IPv6) address;
   determining a master NAT device and a slave NAT device among the at least two NAT devices;
   advertising in an IPv6 network, by the master NAT device, a route corresponding to the prefix64, and advertising in an IPv4 network, a route corresponding to the IPv4 address pool; and
   processing, by the slave NAT device, a packet between a source host and a destination host when the master NAT device fails, wherein the source host and the destination host are located in different Internet Protocol (IP) networks.

2. The method according to claim 1, **characterized in that**: before the master NAT device fails, the method further comprises:

   generating, by the master NAT device, an address mapping table entry, wherein the address mapping table entry is a mapping relationship between an IPv4 address allocated to an IPv6 host from the IPv4 address pool and an IPv6 address of the IPv6 host; and
   synchronizing, by the master NAT device, the address mapping table entry to an address mapping table of the slave NAT device.

3. The method according to claim 1, **characterized in that**:

   the pre-configuring the IPv4 address pool and the prefix64 on the at least two NAT devices comprises:

   pre-configuring different IPv4 address pools and the same prefix64 on the at least two NAT devices, accordingly the destination host's IP address in a network of the source host remains unchanged before the slave NAT device processes a packet between the source host and the destination host; or
pre-configuring different prefix64 and the same IPv4 address pool on the at least two NAT devices, accordingly the destination host's IP address in the network of the source host remains unchanged before the slave NAT device processes a packet between the source host and the destination host; or
pre-configuring the same IPv4 address pool and the same prefix64 on the at least two NAT devices, accordingly the destination host's IP address in the network of the source host remains unchanged and the source host's IP address in a network of the destination host remains unchanged before the slave NAT device processes a packet between the source host and the destination host.

4. The method according to claim 1, **characterized by** further comprising:

   configuring at least two instances on the at least two NAT devices, wherein each instance corresponds to a different master NAT device.

5. A device for implementing redundancy backup between Network Address Translation (NAT) devices, **characterized by** comprising a storage module, a route information advertising module and a packet processing module, wherein:

   the storage module, configured to store a configured Internet Protocol version 4 (IPv4) address pool and a prefix64, wherein the prefix64 is used to map an IPv4 address to an Internet Protocol version 6 (IPv6) address;
   the route information advertising module, configured to advertise in an IPv6 network a route corresponding to the prefix64, and advertise in an IPv4 network a route corresponding to the IPv4 address pool; and
   the packet processing module, configured to process a packet between a source host and a destination host, wherein the source host and the destination host are located in different Internet Protocol (IP) networks.

6. The device according to claim 5, **characterized by** further comprising:

   an address mapping table entry generating module, configured to generate an address mapping table entry after the packet processing module processes a packet from the source host, wherein the address mapping table entry is a mapping relationship between an IPv4 address allocated to an IPv6 host from the IPv4 address pool and an IPv6 address of the IPv6 host; wherein

the storage module is configured to store the address mapping table entry generated by the address mapping table entry generating module; and

the synchronizing module is configured to synchronize the address mapping table entry to an address mapping table of a slave NAT device.

7. The device according to claim 5, **characterized in that** the storage module is specifically configured to:

store pre-configured different IPv4 address pools and the same prefix64 on the at least two NAT devices; or

store pre-configured different prefix64 and the same IPv4 address pool on the at least two NAT devices; or

store the pre-configured same IPv4 address pool and the same prefix64 on the at least two NAT devices.

8. A system for implementing redundancy backup between Network Address Translation (NAT) devices, **characterized by** comprising a first device and a second device, wherein:

an Internet Protocol version 4 (IPv4) address pool and a prefix64 are configured on the first device and the second device, wherein the prefix64 is used to map an IPv4 address to an Internet Protocol version 6 (IPv6) address; one of the first device and the second device is determined as a master NAT device, and the other is determined as a slave NAT device;

the master NAT device is configured to advertise in an IPv6 network a route corresponding to the prefix64, and advertise in an IPv4 network a route corresponding to the IPv4 address pool; and

the slave NAT device is configured to process a packet between a source host and a destination host when the master NAT device fails, wherein the source host and the destination host are located in different Internet Protocol (IP) networks.

9. The system according to claim 8, **characterized in that**:

the master NAT device is further configured to generate an address mapping table entry and synchronize the address mapping table entry to an address mapping table of the slave NAT device, wherein the address mapping table entry is a mapping relationship between an IPv4 address allocated to an IPv6 host from the IPv4 address pool and an IPv6 address of the IPv6 host.

FIG. 1

FIG. 2

The same IPv4 address pool and a 96bits prefix for mapping an IPv4 address to an IPv6 address are configured on at least two NAT devices ⟋302

A keeplive protocol runs on the at least two NAT devices, among which one is determined as a master NAT device, and the other is determined as a slave NAT device ⟋304

The master NAT device advertises in the IPv6 network a route corresponding to the 96bits prefix, and advertises in the IPv4 network a route corresponding to an IPv4 prefix in the IPv4 address pool ⟋306

The master NAT device processes the packet from the host ⟋308

The master NAT device generates an address translation table entry, which is designed to record the IPv6 address corresponding to the host and the IPv4 address temporarily allocated from the IPv4 address pool ⟋310

The master NAT device synchronizes the address translation table entry to the slave NAT device ⟋312

FIG. 3

```
   ┌─402            ┌─404           ┌─406
┌──────────┐   ┌──────────┐   ┌──────────┐
│ Storage  │   │  Route   │   │  Packet  │
│  module  │───│information│──│processing│
│          │   │advertising│  │  module  │
│          │   │  module  │   │          │
└──────────┘   └──────────┘   └──────────┘
     │                              │
     │                              ▼
     │                       ┌──────────┐  ┌─408      ┌─410
     │                       │ Address  │  ┌──────────┐
     │                       │translation table│  │Synchronizing│
     └───────────────────────│entry generating│──│  module  │
                             │  module  │  └──────────┘
                             └──────────┘
```

FIG. 4

```
   ┌─502            ┌─504           ┌─506
┌──────────┐   ┌──────────┐   ┌──────────┐
│ Storage  │   │  Route   │   │  Packet  │
│  module  │───│information│──│processing│
│          │   │advertising│  │  module  │
│          │   │  module  │   │          │
└──────────┘   └──────────┘   └──────────┘
     │                              │
     │                              ▼
     │                       ┌──────────┐  ┌─508      ┌─510
     │                       │ Address  │  ┌──────────┐
     │                       │translation table│  │Synchronizing│
     └───────────────────────│entry generating│──│  module  │
                             │  module  │  └──────────┘
                             └──────────┘
```

FIG. 5

An IPv4 address pool and a prefix64 for mapping an IPv4 address to an IPv6 address are configured on at least two NAT devices ⟋— 600

Among the at least two NAT devices, one is determined as a master NAT device and the other is determined as a slave NAT device ⟋— 602

The master NAT device advertises in an IPv6 network a route corresponding to the prefix64, and advertises in an IPv4 network a route corresponding to the IPv4 address pool ⟋— 604

The slave NAT device processes packets between a source host and a destination host when the master NAT device fails, where the source host and the destination host are located in different IP networks ⟋— 606

FIG. 6

# INTERNATIONAL SEARCH REPORT

| International application No. |
| --- |
| PCT/CN2009/072004 |

**A. CLASSIFICATION OF SUBJECT MATTER**

H04L12/56 (2006.01) i

According to International Patent Classification (IPC) or to both national classification and IPC

**B. FIELDS SEARCHED**

Minimum documentation searched (classification system followed by classification symbols)

IPC:H04L, H04W, H04Q

Documentation searched other than minimum documentation to the extent that such documents are included in the fields searched

Electronic data base consulted during the international search (name of data base and, where practicable, search terms used)

WPI; EPODOC; PAJ; TXTWO1; CPRS; CNKI:IPv4, IPv6, NAT, master, slave, primary, backup, standby, switch???, fault, break down, out of order, error, malfunction, network address translation, address pool, prefix, prefixion

**C. DOCUMENTS CONSIDERED TO BE RELEVANT**

| Category* | Citation of document, with indication, where appropriate, of the relevant passages | Relevant to claim No. |
| --- | --- | --- |
| X | CN101141494A (HANGZHOU HUASAN COMMUNICATION TECHNOLOGY) 12 Mar. 2008(12.03.2008) the description, page 1, line 6-page 2, line 25, figure 3-4 | 1-9 |
| X | CN101136926A (HANGZHOU HUASAN COMMUNICATION TECHNOLOGY) 05 Mar. 2008(05.03.2008) the description, page 1, line 6-page 2, line 25, figure 3-4 | 1-9 |
| X | US20040165602A1 (SAMSUNG ELECTRONICS CO., LTD.) 26 Aug. 2004(26.08.2004) the description, paragraph[0020]-[0023], paragraph[0050]-[0061], figure 3, 5-6 | 5-7 |
| A | the whole document | 1-4,8-9 |
| A | US6687222B1 (CISCO TECHNOLOGY, INC.) 03 Feb. 2004(03.02.2004) the whole document | 1-9 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 18 Nov. 2009(18.11.2009) | **24 Dec. 2009 (24.12.2009)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>GONG, Mei<br><br>Telephone No. (86-10)62411250 |
| --- | --- |

Form PCT/ISA /210 (second sheet) (July 2009)

## INTERNATIONAL SEARCH REPORT
### Information on patent family members

| | International application No. |
|---|---|
| | PCT/CN2009/072004 |

| Patent Documents referred in the Report | Publication Date | Patent Family | Publication Date |
|---|---|---|---|
| CN101141494A | 12.03.2008 | None | |
| CN101136926A | 05.03.2008 | None | |
| US20040165602A1 | 26.08.2004 | KR20040075670A | 30.08.2004 |
| | | KR100612007B1 | 11.08.2006 |
| | | US7450499B2 | 11.11.2008 |
| US6687222B1 | 03.02.2004 | US7570586B1 | 04.08.2009 |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200910105800